Europäisches Patentamt

European Patent Office

Office européen des brevets

(19)

(11) Veröffentlichungsnummer: **0 238 506**
**B1**

(12) # EUROPÄISCHE PATENTSCHRIFT

(45) Veröffentlichungstag der Patentschrift:
15.11.89

(21) Anmeldenummer: 86904784.5

(22) Anmeldetag: 13.08.86

(86) Internationale Anmeldenummer:
PCT/DE 86/00328

(87) Internationale Veröffentlichungsnummer:
WO 87/01829 (26.03.87 Gazette 87/07)

(51) Int. Cl.⁴: **G 05 B 19/12**

(54) **VERFAHREN ZUM AUTOMATISCHEN, RECHNERGESTEUERTEN UMRÜSTEN VON BEARBEITUNGS- UND/ODER MONTAGESTATIONEN EINER FERTIGUNGSSTRASSE.**

(30) Priorität: 11.09.85 DE 3532382

(43) Veröffentlichungstag der Anmeldung:
30.09.87 Patentblatt 87/40

(45) Bekanntmachung des Hinweises auf die Patenterteilung:
15.11.89 Patentblatt 89/46

(84) Benannte Vertragsstaaten:
CH DE FR GB IT LI SE

(56) Entgegenhaltungen:
DE-A-3 406 325
GB-A-883 620
GB-A-1 267 651

(73) Patentinhaber: ROBERT BOSCH GMBH, Postfach
50, D-7000 Stuttgart 1 (DE)

(72) Erfinder: BAUER, Kurt, Bosslerstrasse 11, D-7302
Ostfildern 2 (DE)
Erfinder: FISCHER, Karl- Heinz, Porschestrasse 7,
D-7145 Markgröningen (DE)
Erfinder: HUBER, Heinz, Bottwartalstrasse 75,
D-7140 Ludwigsburg (DE)

## Beschreibung

### Stand der Technik

Die Erfindung geht aus von einem Verfahren nach der Gattung des Patentanspruchs 1 gemäß der GB-A-1 267 651. Durch die DE-AS-1 809 745 ist bereits eine Transferstraße mit durch einen elektronischen Rechner zentral gesteuerten Werkzeugmaschinen bekannt, welche in Übereinstimmung mit dem Programm des Rechners die Bearbeitung von jeweils mit einer Identifikationsmarke versehenen Werkstücken durchführen. Dabei ist jeder Werkzeugmaschine eine Steuereinheit zugeordnet, welche entsprechend der Identifikationsmarke des der Werkzeugmaschine zugeführten Werkstücks ein bestimmtes Programm von dem elektronischen Rechner abruft. Die Werkstücke werden einzeln durch Verfahrensmarken - z. B. in Form einer codierten Zahl identifiziert, welche repräsentativ für einen Istzustand des Werkstücks ist. Die Identifizierung der Verfahrensmarke kann für eine Bedienungsperson sichtbar gemacht werden, welche die Bearbeitung des Werkstücks beobachtet und dafür sorgt, daß die entsprechende Verfahrenszahl von einem Bedienungsstand in den Rechner übertragen wird. Alternativ kann die Identifizierung selbsttätig durch Ableseeinheiten vorgenommen werden, welche beispielsweise eine am Werkstückträger befestigte Verfahrenskarte abtastet und die auf der Verfahrenskarte aufgezeichnete Verfahrensmarke in den Rechner übermittelt. Vor jedem weiteren Bearbeitungs- bzw. Bestückungsvorgang des Werkstücks muß die bisherige Karte gegen eine neue Karte ausgetauscht werden, auf welche dann die für den nächsten Bearbeitungsvorgang relevanten Daten aufgedruckt werden. Bei dieser bekannten Transferstraße muß also die an jedem einzelnen Werkstück bzw. Werkstückträger angebrachte Verfahrensmarke vor Durchführung jedes weiteren Bearbeitungs- bzw. Bestückungsvorgangs durch eine neue Verfahrensmarke ersetzt werden, und zwar auch dann, wenn eine Serie gleicher Werkstücke dieselben Bearbeitungen bzw. Bestückungen erfährt.

Das Auswechseln und Bedrucken der Verfahrenskarten vor jedem Bearbeitungsvorgang erfordert einen erheblichen Aufwand an zusätzlichen Einrichtungen. So muß beispielsweise jeder Werkstückträger mit einer Haltevorrichtung für die Karte versehen und vor jeder Bearbeitungsstation eine Kartenwechsel- und Bedruckvorrichtung angeordnet sein. Das Wechseln, Bedrucken und Auslesen der Karten erfordert Zeit, welche in die Umrüst- und Taktzeit der einzelnen Bearbeitungsstationen eingeht und den Ausstoß bearbeiteter Werkstücke pro Zeiteinheit entsprechend reduziert.

Es gibt auch schon Verfahren zum automatischen, rechnergesteuerten Umrüsten von Bearbeitungs- und/oder Montagestationen einer Fertigungsstraße in Abhängigkeit von werkstückspezifischen Typdaten, die in den Stationen zugeordneten Speichern abgelegt und durch Identifikationsmarken der Werkstücke zur Eingabe in die Steuereinheiten der Stationen abrufbar sind (DE-A-3 406 325). Jedes Werkstück bzw. jeder Werkstückträger benötigt eine eigene Identifikationsmarke in Form einer Zahlenkombination. Dies verlängert die Taktzeiten der Fertigungsstraße, da die einzelnen Bearbeitungsstationen immer erst dann umgestellt werden können, wenn die entsprechenden Identifikationsmarken der jeweils zu bearbeitenden bzw. zu bestückenden Werkstücke an den einzelnen Bearbeitungsstationen ausgelesen sind. Außerdem besteht die Gefahr, daß den Werkstücken falsche Identifikationsmarken zugeordnet wurden oder die Identifikationsmarken infolge Verschmutzung oder dergleichen falsch ausgelesen werden. In beiden Fällen werden die Werkstücke falsch bearbeitet bzw. bestückt, was bei großen Werkstückserien zu hohen Ausfallquoten führen kann.

Durch die GB-A-1 267 651 ist es ferner bekannt, vor einer Gruppe gleichartig zu bearbeitender Werkstücke einen Identifikationsmarkenträger mit einem Codiersystem einzubringen. Die jeweilige Codierung dieses Systems wird über ein Lesegerät in einen Programmer eingelesen, welcher Bearbeitungsstationen den jeweils erforderlichen Vorgängen entsprechend ein- bzw. umstellt. Auch bei diesem bekannten System steht und fällt die richtige Bearbeitung der Werkstücke mit der richtigen Programmierung des Identifikationsmarkenträgers. Eine falsche Programmierung des Trägers führt zu einer falschen Bearbeitung der nachfolgenden Werkstückgruppe.

### Vorteile der Erfindung

Das erfindungsgemäße Verfahren mit den kennzeichnenden Merkmalen des Patentanspruchs 1 hat demgegenüber den Vorteil, daß zum Umrüsten der Bearbeitungs- und/oder Montagestationen auf eine neue Serie gleicher Werkstücke nur ein einziger Identifikationsmarkenträger erforderlich ist, der vor dem ersten Werkstückträger der Werkstückserie in die Fertigungsstraße eingebracht wird. Dieser eine Identifikationsmarkenträger veranlaßt das Umrüsten aller Stationen der Fertigungsstraße, indem er die durch vorherige Eingabe einer werkstückspezifischen Kennziffer in den Speichern angewählten Umrüstadressen nacheinander abruft. Die Identifikationsmarke liest also keine werkstückspezifischen Typdaten in die Speicher ein, sondern ruft bereits angewählte Daten nur noch ab. Dies ermöglicht einen sehr einfachen, übersichtlichen und aufwandsparenden Aufbau der Fertigungsstraße mit kurzen Umrüstzeiten und optimaler Ausnutzung der durch die einzelnen Bearbeitungsstationen vorgegebenen Taktzeiten. Außerdem ist dadurch eine doppelte Sicherheit gegen falsche Bearbeitung einer Werkstückserie vorhanden. Die Steuereinheiten der Bearbeitungs- und/oder Montagestationen der Fertigungsstraße werden erst aktiviert, wenn die manuell eingegebene Kennziffer mit der Codierung des Identifikationsmarkenträgers übereinstimmt. Andernfalls bleibt das System tot. Die Bedienungsperson bat dadurch Gelegenheit, vor Beginn einer Bearbeitung bzw. Bestückung von Werkstücken die Codierungen zu überprüfen und gegebenenfalls zu berichtigen.

Durch die in den Unteransprüchen aufgeführten Maßnahmen sind vorteilhafte Weiterbildungen und Verbesserungen des erfindungsgemäßen Verfahrens möglich. Bevorzugt wird die typspezifische Kennziffer in Zwischenspeicher eingegeben und bei Anruf durch den Identifikationsmarkenträger in adressierbare Umrüstspeicher der Steuereinheiten eingelesen. Der Identifikationsmarkenträger wird an jeder Bearbeitungs- und/oder Montagestation angehalten, bis der Umrüstvorgang der Station beendet ist.

## Zeichnung

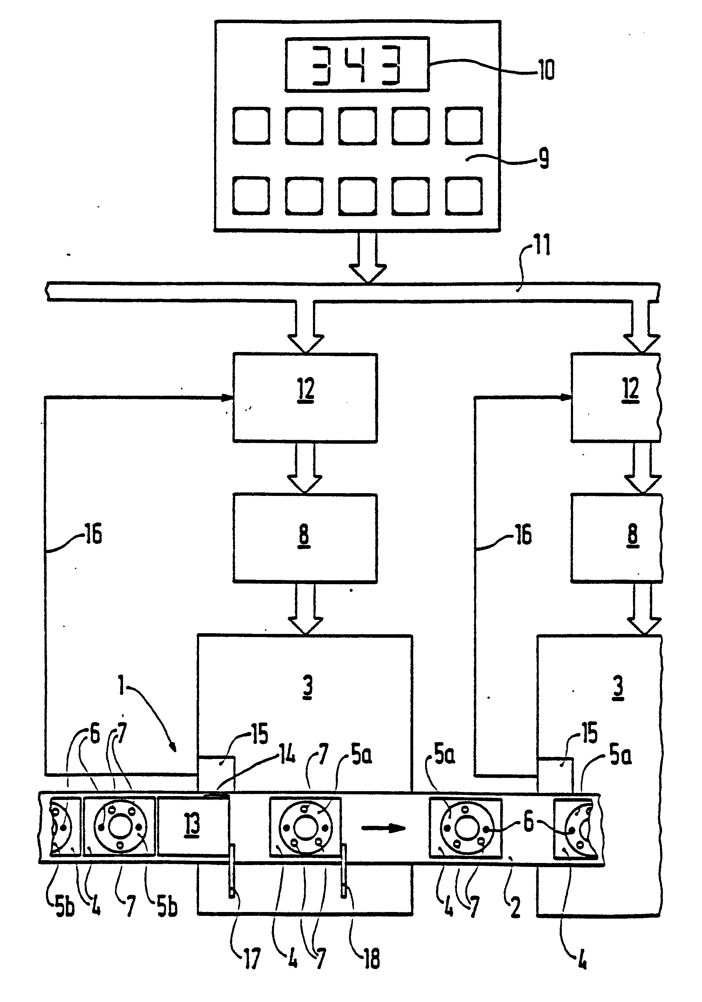

Weitere Merkmale und Einzelheiten der Erfindung ergeben sich aus der nachfolgenden Beschreibung anhand eines in der Zeichnung dargestellten Ausführungsbeispiels. Die Figur zeigt einen Teil einer schematisch dargestellten Fertigungsstraße mit mehreren Bearbeitungs- und /oder Montagestationen sowie die zum automatischen Umrüsten der Stationen dienenden Eingabeeinheiten und Datenspeicher.

## Beschreibung des Ausführungsbeispiels

In der Zeichnung ist mit 1 eine Fertigungs- oder Transferstraße bezeichnet. Diese besteht im wesentlichen aus einem in Pfeilrichtung angetriebenen Förderband 2 und mehreren Bearbeitungs- und/oder Montagestationen 3. Auf dem Förderband 2 befinden sich Werkstückträger 4, die aus rechteckförmigen Platten gleicher Große bestehen können. Die Werkstücke selbst sind mit 5a und 5b bezeichnet und sind mittels Bolzen 6 oder dergleichen in einer vorgegebenen Lage auf den Tragern fixiert. Im Ausführungsbeispiel bestehen die Werkstücke aus Scheiben, welche u.a. mehrere Bohrungen 7 aufweisen, die in einer ersten Station 3 mit Stiften oder Gewindebolzen besetzt werden. Die Bohrungen 7 sind bei den Werkstücken 5a und 5b unterschiedlich angebracht, so daß zum Einsetzen von Stiften oder Gewindebolzen in die Bohrungen, zum Bestücken der Stifte mit Hülsen, Muttern, Unterlegscheiben, Anschlußdrähten und dergleichen oder zum nachträglichen Bearbeiten der Stifte die hierzu vorgesehenen Werkzeuge der einzelnen Bearbeitungsstationen Bewegungen in unterschiedlichen, durch die Lage der Bohrungen 7 vorgegebenen Richtungen durchzuführen haben.

Das Umrüsten der Bearbeitungs- und Montagestationen 3 geschieht automatisch in Abhängigkeit von werkstückspezifischen Typdaten, die in Speichern 8 abgelegt sind. Jeder Speicher 8 enthält nur diejenigen Adressen, die zum Umrüsten der betreffenden Station 3 auf den jeweiligen Werkstücktyp erforderlich sind. Sollen in der Fertigungsstraße 1 beispielsweise zwei Serien unterschiedlicher Werkstücke 5a und 5b bearbeitet bzw. bestückt werden, so ist in jedem Speicher 8 ein Umrüstcode für das Werkstück 5a und ein Umrüstcode für das Werkstück 5b einprogrammiert. Die jeweilige Adresse in den Speichern 8 wird durch eine typspezifische Kennziffer angewählt, die jeweils über eine Tastatur 9 mit Anzeigedisplay 10 eingegeben wird. Die gerade in Bearbeitung befindlichen Werkstücke 5a haben die Kennziffer 343, während den zur Bearbeitung anstehenden Werkstücken 5b beispielsweise die Kennziffer 355 zugeordnet sein kann. Die jeweilige, typespezifische Kennziffer wird als Binärcode über einen gemeinsamen Datenbus 11 in Zwischenspeicher 12 eingelesen, wobei jeder Bearbeitungs- und /oder Montagestation 3 der Fertigungsstraße 1 ein solcher Zwischenspeicher zugeordnet ist.

Die codierte Kennziffer, welche aus Zahlen, Buchstaben, Zeichen oder einer Kombination hiervon bestehen kann, wird durch Identifikationsmarkenträger 13 abgerufen, wobei die Kennziffer über die Speicher 8 das Umrüsten der einzelnen Stationen 3 auf den zur Bearbeitung anstehenden Werkstücktyp veranlaßt. Der Identifikationsmarkenträger 13 besteht im Ausführungsbeispiel aus einem unbestückten Werkstückträger, der zwischen dem letzten Werkstückträger 4 der in Bearbeitung befindlichen Werkstücke 5a und dem ersten Werkstückträger 4 der zur Bearbeitung anstehenden Werkstücke 5b auf das Förderband 2 aufgelegt wird. Der Werkstückträger 13 hat ein Codiersystem 14, das zuvor entsprechend der zu bearbeitenden Werkstückserie eingestellt wird. Die gewählte Codierung wird an stationären Lesestationen 15 ausgelesen und in ein elektrisches Signal umgesetzt, das über Leitungen 16 in die Zwischenspeicher 12 gelangt.

Jede Bearbeitungs- bzw. Montagestation 3 hat einen Vereinzeler 17 und einen Stopper 18. Der Vereinzeler, beispielsweise ein in die Bahn der ankommenden Werkstückträger 4 einführbarer Arm, hält die Werkstückträger solange an, bis das in der Station 3 befindliche Werkstück fertig bearbeitet bzw. bestückt ist. Auch der Identifikationsmarkerträger 13 wird vom Vereinzeler 17 in Ausleseposition solange angehalten, bis der vor ihm befindliche Werkstückträger 4 mit dem Werkstück 5a die Station 3 verlassen hat und das Umrüsten der Station beendet ist. Der Stopper 18 dient dazu, den Werkstückträgern 4 eine definierte Bearbeitungsposition innerhalb der Stationen 3 vorzugeben. Die unbestückten Identifikationsmarkerträger 13 durchlaufen die Bear-

beitungsstationen 3, ohne von den Stoppern 18 angehalten zu werden.

Soll eine Serie von Werkstücken 5a bearbeitet bzw. bestückt werden, so gibt der Bediener zunächst mittels der Tastatur 9 die typspezifische Kennziffer, im Ausführungsbeispiel die Zahl "343", über den Datenbus 11 in die Zwischenspeicher 12 ein. Die Kennziffer wird dabei als Binärcode gespeichert und ist im Anzeigedisplay 10 sichtbar. Nun wird das Förderband 2 eingeschaltet und zunächst ein entsprechend codierter Identifikationsmarkenträger 13 auf das Band aufgelegt. An diesen Träger 13 schließen sich die Werkstückträger 4 mit den darauf befindlichen Werkstücken 5a an. Der Träger 13 wird bei Erreichen der Auslesestation 15 durch den Vereinzeler 17 angehalten und seine von der Lesestation 15 ausgelesene Codierung als elektrisches Signal über die Leitungen 16 in den Zwischenspeicher 12 eingegeben. Mit diesem Signal wird der im Zwischenspeicher 12 befindliche Binärcode abgerufen und in den Speicher 8 übertragen, wo er eine bestimmte der dort abgelegten Adressen anspricht. Diese Adresse veranlaßt das Umrüsten der Bearbeitungs- bzw. Montagestation 3 entsprechend der eingegebenen werkstückspezifischen Kennziffer. Die nachfolgenden Träger mit der neuen Werkstückserie 5a werden vom Vereinzeler 17 angehalten bis der Umrüstvorgang an dieser Station beendet ist. Der Träger 13 wird sofort vom Förderband 2 zur nächsten Bearbeitungsstation 3 gebracht und löst dort den Umrüstvorgang aus. So durchläuft der Identifikationsmarkenträger 13 alle Stationen der Fertigungsstraße und rüstet diese nacheinander um.

Dem Identifikationsmarkenträger 13 folgen die Werkstückträger 4 mit den Werkstücken 5a, die in den einzelnen Bearbeitungs- bzw. Montagestationen 3 entsprechend dem vom Träger 13 abgerufenen Programmen bearbeitet bzw. bestückt werden. Noch während die Werkstücke 5a die Fertigungsstraße durchlaufen, kann mittels der Tastatur die Kennziffer für die nächste zu bearbeitende Werkstückserie mit den Werkstücken 5b in die Zwischenspeicher 12 eingelesen werden. Die neue Kennziffer bleibt dabei solange blockiert, bis die zuvor eingegebene Kennziffer abgearbeitet ist. Es ist auch möglich, mit der Kennziffer Adressen in den Speichern 8 der Steuereinheiten direkt anzuwählen und diese dann mit dem Identifikationsmarkenträger 13 abzurufen.

Anschließend an den letzten Werkstückträger der Werkstückserie 5a wird ein Identifikationsmarkenträger 13 auf das Förderband 2 aufgelegt, dessen Codierung 14 ein Umrüsten der Bearbeitungs- bzw. Montagestationen 3 auf die Belange der nachfolgenden Werkstücksserie 5b veranlaßt. Der Übergang erfolgt fließend, d.h. während in einer Station 3 noch Werkstücke 5a bearbeitet bzw. bestückt werden laufen in die vorhergehenden, umgerüsteten Stationen 3 bereits Werkstücke 5b des neuen Typs ein.

## Patentansprüche

1. Verfahren zum automatischen, rechnergesteuerten Umrüsten von Bearbeitungs- und/oder Montagestationen (3) einer Fertigungsstraße (1) in Abhängigkeit von werkstückspezifischen Typdaten, die in den Stationen (3) zugeordneten Speichern (8) abgelegt sind und durch einen vor dem ersten Werkstückträger (4) einer Werkstückserie (5a bzw. 5b) des gleichen Typs in die Fertigungsstraße (1) eingebrachten, codierbaren Identifikationsmarkenträger (13) abgerufen werden, dadurch gekennzeichnet, daß die gespeicherten Daten zum Umrüsten aller Stationen (3) auf einen bestimmten Werkstücktyp (5a bzw. 5b) vor dem Durchlauf dieses Typs durch manuelle Eingabe einer werkstückspezifischen Kennziffer angewählt werden, und daß der Identifikationsmarkenträger (13) eine der eingegebenen Kennziffer entsprechende Codierung (14) hat, mittels welcher er bei Erreichen einer Bearbeitungs- und/oder Montagestation (3) die werkstückspezifische Kennziffer und damit die angewählten Daten zum Umrüsten dieser Station (3) abruft.

2. Verfahren nach Anspruch 1, dadurch gekennzeichnet, daß die werkstückspezifische Kennziffer über einen Datenbus (11) in einen Zwischenspeicher (12) eingegeben wird und bei Abruf durch die Codierung des Identifikationsmarkenträgers (13) vorgegebene Adressen in programmierbaren Speichern (8) der Steuereinheit aktiviert.

3. Verfahren nach Anspruch 1 oder 2, dadurch gekennzeichnet, daß der Identifikationsmarkenträger (13) an jeder Bearbeitungs- und/oder Montagestation (3) angehalten wird, bis der Umrüstvorgang der Station beendet ist.

## Claims

1. Method for the automatic computer-controlled resetting of processing and/or assembly stations (3) of a production line (1) as a function of workpiece-specific type data, which are stored in memories (8) allocated in the stations (3) and which are called up by a codable identification mark carrier (13) introduced into the production line (1) before the first workpiece carrier (4) of a workpiece series (5a or 5b) of the same type, characterized in that the stored data for resetting all stations (3) to a particular workpiece type (5a or 5b) are selected before the passage of this type by manually entering a workpiece-specific code, and in that the identification mark carrier (13) has a coding (14) corresponding to the entered code, by means of which it calls up the workpiece-specific codes and thus the selected data for resetting this station (3) when it reaches a processing and/or assembly station (3).

2. Method according to Claim 1, characterized in that the workpiece-specific code is entered into a buffer memory (12) via a databus (11) and on being called up by the coding of the identification mark carrier (13) activates preset addresses in programmable memories (8) of the control unit.

3. Method according to Claim 1 or 2, characterized in that the identification mark carrier (13) is stopped at each processing and/or assembly station (3) until the resetting procedure of the station is completed.

## Revendications

1. Procédé pour transformer automatiquement et de manière commandée par un calculateur, des postes d'usinage et/ou de montage (3) d'une chaîne de production en fonction des données de type caractéristique des pièces, qui sont inscrites dans des mémoires (8) associées aux postes (3) et peuvent être appelées par un support de repère d'identification des pièces (13), et qui peuvent être appelées par un support de repère d'identification codé (13) mis en place en amont du premier support de pièce (4) d'une série de pièces (5a, 5b) de même type dans la chaîne de fabrication (1), procédé caractérisé en ce que les données mises en mémoire pour transformer tous les postes (3) en fonction d'un type de pièce déterminé (5a, 5b) sont choisis avant le passage de ce type, par introduction manuelle d'un chiffre caractéristique, spécifique d'une pièce et en ce que le support de repères d'identification (13) comporte un codage (14) correspondant au chiffre caractéristique introduit, codage par lequel, lorsqu'il atteint un poste d'usinage et/ou de montage (3), appelle la caractéristique spécifique de la pièce et ainsi les données choisies pour transformer ce poste (3).

2. Procédé selon la revendication 1, caractérisé en ce que le chiffre caractéristique spécifiques d'une pièce est introduit dans la mémoire intermédiaire (12) par un bus de données (11) et il est activé lors de l'appel par les adresses prédéterminées par le codage du support de repères d'identification (13), dans les mémoires programmées (8) de l'unité de commande.

3. Dispositif selon les revendications et 1 ou 2, caractérisé en ce qu'à chaque poste d'usinage et/ou de montage (3), on retient le support de repères d'identification (13) jusqu'à la fin de la transformation du poste dans sa position de lecture, jusqu'à ce que la phase de transformation du poste soit terminée.